# EUROPEAN PATENT SPECIFICATION

(11) **EP 0 654 515 B1**
(45) Date of publication and mention of the grant of the patent: **08.03.2000**
(21) Application number: 94918625.8
(22) Date of filing: 06.06.1994
(51) Int. Cl.: C09K 3/16

(54) **PROCESS FOR OBTAINING ANTISTATIC POLYMER COMPOUNDS**
VERFAHREN ZUR GEWINNUNG VON ANTISTATISCHEN POLMERVERBINDUNGEN
PROCEDE D'OBTENTION DE COMPOSES POLYMERES ANTISTATIQUES

(30) Priority: 07.06.1993 RU 93031290
(43) Date of publication of application: 24.05.1995
(73) Proprietor: Kryshtob, Vitaly Ilich, Moscow, 113162 (RU)
(72) Inventor: Kryshtob, Vitaly Ilich, Moscow, 113162 (RU)
(74) Representative: Rambelli, Paolo
(86) International application number: RU9400122
(87) International publication number: WO9429401

(56) References cited:
- SU-A- 1 397 459
- SU-A- 1 645 277
- US-A- 3 594 222
- US-A- 3 745 116
- US-A- 3 875 082

## Description

### FIELD OF THE INVENTION

The present invention relates to chemical technology and particularly, to methods for production of antistatic polymer materials by introducing antistatic additives into them. These materials can be utilized for production of various polymer coatings.

### BACKGROUND OF THE INVENTION

It is common knowledge that a reduction of electrostatic polarization of polymer coatings provides an improvement of environmental conditions for human activity. Therefore a considerable number of inventions are aimed at the development of methods for improving the antistatic characteristics of polymer materials.

One of the most widely used methods for reducing the static electricity of polymer materials and compositions based thereon, is to introduce antistatic agents into these materials.

Particularly known in the art is a method for reducing static electricity of polymer materials by the introduction of various amine derivatives into these materials (SU,A,484238).

However, use of nitrogen-containing additives in said prior art has an adverse effect upon the thermal stability of polymer materials, and coatings based thereon, for example, floor coatings, possess low antistatic properties.

Also known in the art is a method for production of antistatic polymer composition by introduction into a polymer composition during processing thereof of the antistatic agent Syntamide-5 (Standard Technological Regulation for Polyvinyl Chloride Linoleum Production, All-Union Research and Design Institute for Polymer Construction Material, Moscow, 1986, pp. 6, 44).

The basic disadvantage of said prior art is an essentially limited antistatic effect achieved by the use thereof. This is caused by the fact that an insufficient quantity of antistatic agent does not ensure appropriate antistatic properties, whereas the excessive introduction of Syntamide-5 into a composition results in a high "sweating out" of the antistatic agent and reduces the processability of said composition.

The closest prior art with respect to the present invention is a method for production of antistatic polymer materials, including an introduction of an antistatic agent in a form of an antistatic agent solution into a polymer composition during processing thereof (SU,A,1390230). In said prior art, the antistatic agent are aqueous solutions of substances capable to hydrate water of crystallization in a solid state. Such substances can be solid conductive mineral filling agents.

Said prior art allows one to produce polymer coatings possessing sufficiently high antistatic properties. However, application of said coatings is limited by the fact that only a narrow class of substances, capable to hydrate water of crystallization in solid state, can be used as an antistatic agent. In addition, the release of water from a polymer composition at the stage of thermal processing thereof, and establishment of an aggressive vapour environment result in a quick corrosive wear of the equipment.

A method is known of antistatic polymer composition obtaining, including incorporating into it an organic salt and polyhydric alcohol (Brindell et al, US patent 3,745,116).

### SUMMARY OF THE INVENTION

The main object of the present invention is to reduce the corrosive wear of equipment while maintaining antistatic and physical and mechanical properties of the materials produced.

A further object of the invention is to extend a range of substances utilized as antistatic agents and to provide an improvement of decorative properties of antistatic materials produced (including production of transparent polymer coatings).

Said object is attained by a method for production of antistatic polymer materials, including the introduction of an antistatic agent in the form of a solution into a polymer composition during the processing thereof, wherein a solution of antistatic agent in an organic solvent is used, compatible with the polymer matrix, the antistatic agent being at least one compound from the group consisting of organic salts, inorganic salts, complex compounds, bases; the composition being processed at temperatures not exceeding the least of the temperatures Tₚ₁, Tₚ₂, Tₖ₁, Tₖ₂, where Tₚ₁ and Tₚ₂ are antistatic and solvent decomposition temperatures, and Tₖ₁ and Tₖ₂ are antistatic and solvent boiling temperatures respectively.

Alternatively, according to the present invention, an organic acid is additionally introduced into the solution of the antistatic agent.

Also, according to the invention, the solutions of antistatic agent are homogeneous solutions.

Additionally, the organic solvent is at least one compound from the group consisting of glycols, ETHERS and derivatives thereof.

The present invention differs from the closest prior art by the fact that an antistatic compound is used in a form of a solution of the antistatic compound in a high-boiling organic solvent, compatible with a polymer matrix. The term "compatible" is intended to imply an absence of boiling away and decomposition of the antistatic agent during the composition processing and production of polymer materials under the process temperature ranges mentioned above. This allows one to considerably reduce the release of an aggressive medium, i.e., antistatic agent, from a polymer matrix during its processing, while maintaining high antistatic characteristics of the polymer materials being produced, thus providing a reduction of corrosive wear on the equipment.

Owing to elimination of the evaporization losses, inherent in the closest prior art during water-vapour phase transition, the method according to the present invention ensures a reduction of energy consumption per product unit, with other conditions being equal.

The advantages of the present invention will become clearer from the following description of the examples which implement the invention.

### Example 1

A polymer composition is prepared by mixing, at ambient temperature, the following components, taken in parts by weight:

| | |
|---|---|
| polyvinyl chloride suspension (PVK -C-70) | 100 |
| di-(2-ethylhexyl-phenylphosphate (DAPH) | 20 |
| triethylene glycol dicaprylate (TZK-79) | 40 |
| chrysotile asbestos (7-450 grade) | 75 |
| Antistatic agent : LiNO₃ | 0.7 |
| tetraethylene glycol | 3.5 |

Before introduction of LiNO₃ into the composition, it is dissolved in tetraethylene glycol to obtain a homogeneous (clear) solution.

Film specimens are produced by rolling through rollers at temperature 150°C during 5 min.

### Example 2

This Example differs from Example 1 by the fact that before mixing with tetraethylene glycol there are additionally introduced 2 parts by mass of potassium salt of di-(alkyl polyethylene glycol) ether of phosphorus acid having the following structural formula: 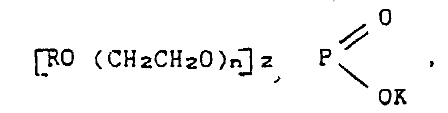 where
R is alkyl group containing 8-10 atoms of carbon, with an average value of n being 6.

### Example 3

A composition is prepared by mixing at ambient temperature the following components, taken in parts by weight:

| | |
|---|---|
| PVK - C-70 (polyvinyl chloride suspension) | 100 |
| dioctylphthalate (DOPH) | 40 |
| trichlorethyl phosphate | 15 |
| chrysotile asbestos | 75 |
| (grade 7-450) | |
| Antistatic agent : | |
| hexahydrate magnesium bromide | 1.0 |
| MgBr₂ - 6H₂O | 7.0 |
| dimethyl diethylene glycol ether | |

Prior to mixing the components, MgBr₂ - 6H₂O is dissolved under agitation in dimethyl diethylene glycol ether to obtain a homogeneous (clear) solution.

The film samples are obtained by rolling through rollers at temperature 140°C for three minutes.

### Example 4

A composition is prepared by mixing at ambient temperature the following components, taken in parts by weight:

| | |
|---|---|
| PVK - C - 70 (polyvinyl chloride suspension) | 100 |
| DAPH (di-(2-ethylhexyl)phenyl phosphate) | 35 |
| triethylene glycol dicaprylate | 15 |
| Antistatic agent lithium chloride (LiC1) | 0.8 |
| triethylene glycol monoethyl ether | 7.0 |

Prior to mixing of the components, LiC1 is dissolved under agitation in triethylene glycol monoethyl ether to produce a homogeneous (clear) solution.

The film samples are obtained by rolling through rollers at temperature 155°C for five minutes.

### Example 5

This Example differs from Examples above by using ethylene-propylene rubber (SKEPT grade) as a polymer matrix (a binder) , instead PVK.

A composition is prepared by mixing at ambient temperature of the following components, taken in parts by weight:

| | |
|---|---|
| ethylene-propylene rubber(grade SKEPT) | 100 |
| chalk | 25 |
| kaolin | 25 |
| potassium bromide | 0.8 |

The film samples are obtained by rolling through rollers under the following conditions:
- rubber plasticization at rollers at ambient temperature 10 min
- introduction, under agitation, of filling agents (chalk, kaolin) and potassium bromide 10 min
- temperature of rollers at the moment of cutting off the material web 30°C.

### Example 6

Differs from Example 6 by introduction of 7 parts of glycerin by weight, instead of potassium bromide (KBr), at the stage of filling agent introduction.

### Example 7

Differs from Example 6 by addition of 0.8 parts of potassium bromide by weight to the composition.

Prior to introduction to the composition, potassium bromide is dissolved, under agitation, in glycerin to obtain a homogeneous (clear) solution.

In the Examples above, the antistatic agent is produced under agitation at a temperature with the range of from 80°C to 100°C.

### Example 8

In this Example, characteristics of a method for production of antistatic polymer composition, including an introduction of Syntamide-5 into a polymer matrix are given for comparison.

A composition is prepared by mixing, at ambient temperature, the following components, taken in parts by mass:

| | |
|---|---|
| PVK - C-70 | 100 |
| DOPH | 50 |
| chrysotile asbestos | |
| (grade 7-450) | 100 |
| Syntamide-5 | 0.8 |

The Syntamide-5 formula is

[CₙH₂ₙ₊₁CONHC₂H₄O (C₂H₄O)ₙH],

where n = 8-18; n = 5-6.

The film samples are produced by rolling through rollers at temperature 150°C for five minutes.

### Example 9

A composition prepared has the following content, expressed in parts by weight:

| | |
|---|---|
| PVK - C-70 | 100 |
| DOPH | 30 |
| Antistatic agent : | |
| potassium hexafluorophosphate (KPF₆) | 1.0 |
| triethylene glycol diethyl ether | 5.0 |
| trichloroethyl phosphate | 10.0 |
| Liquid stabilizer of polyvinyl chloride compositions, e.g., | |
| (Ba - Zn) | 2.0 |

Prior to mixing the components, KPF₆ is dissolved in a mixture of triethylene glycol diethyl ether and trichloroethyl phosphate under heating at approximately 80-100°C and agitation to obtain a homogeneous (clear) solution.

The film samples are produced by rolling through rollers at temperature 180°C for five minutes.

This Example illustrates a utilization of a complex substance in the antistatic agent.

### Example 10

This Example differs from Example 9 by using an organic salt, such as trifluoromethane sulphonyl lithium (CF₃SO₃Li), as an antistatic agent.

### Example 11

A composition prepared has the following content, expressed in parts by mass:

| | |
|---|---|
| PVK - C-70 | 100 |
| DOPH | 35 |
| Antistatic agent | 2.0 |
| trioctylamine | |
| trichloroethyl phosphate | 12.0 |
| Liquid stabilizer | |
| (Ba - Zn) | 2.0 |

Prior to mixing the components, trioctylamine is dissolved in trichloroethyl phosphate at ambient temperature to obtain a homogeneous solution.

The film samples ire produced by rolling through rollers at temperature 150°C for five minutes.

### Example 12

A composition prepared has the following content, expressed in parts by weight:

| | |
|---|---|
| PVK - C-70 | 100 |
| DOPH | 30 |
| Antistatic agent trifluoromethane sulphonic acid | 1.5 |
| (CH₃SO₃H) | |
| lithium chloride (LiC1) | 0.4 |
| trichloroethyl phosphate | 10.0 |
| triethylene glycol diethyl ether | 3.0 |
| Liquid stabilizer | |
| (Ba - Zn) | 1.0 |

Prior to mixing the components, trifluoromethane sulphonic acid and lithium chloride are dissolved in a mixture of triethylene glycol diethyl ether and trichloroethyl phosphate under heating at approximately 100°C and agitation to obtain a homogeneous clear solution.

### Example 13

A polymer composition is prepared according to the closest prior art, by mixing at ambient temperature of the following components, taken in parts by mass:

| | |
|---|---|
| PVK - C-70 | 100 |
| DOPH | 45 |
| sifted chalk | 60 |
| Antistatic agent | |
| potassium carbonate (K₂CO₃) | 15 |
| distilled water | 30 |
| Liquid stabilizer | |
| (Ba - Zn) | 1.5 |

Prior to mixing the components, K₂CO₃ is dissolved in distilled water at ambient temperature.

The film samples are produced by rolling through rollers at temperature 125°C for five minutes.

Specific surface resistivity of the resulting antistatic polymer materials was defined using flat, circular (diameter 50mm) samples of film having a thickness of 0.2-1.5 mm in accordance with standard cost 6433.2-71 "Methods of Defining Resistivity under Direct Voltage".

The tests were conducted using the instrument teraometer E-13A. A number of samples in each test was not less than 3.

Results of testing the film samples are given in Table below.

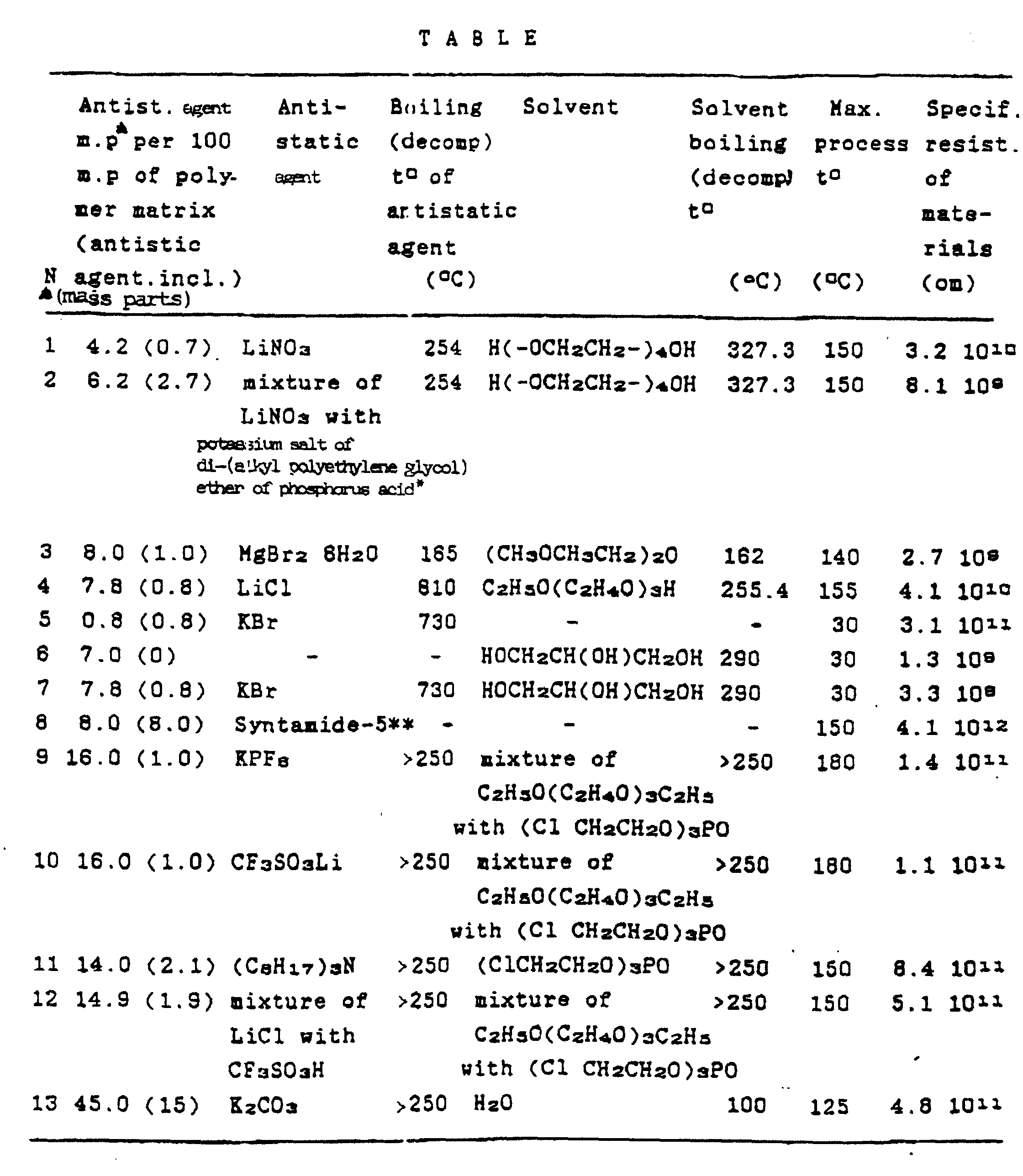

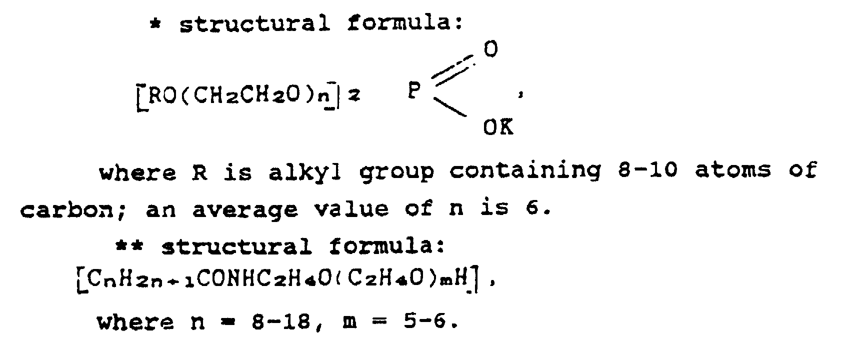

Samples of Test 13 resulted in a considerable corrosion of the surfaces of processing shafts. The remaining tests did not demonstrate such effects.

From Table above, it is obvious that an implementation of the present invention ensures high antistatic properties of the resulting polymer materials for various polymer types. The significant feature is that an aggressive, corrosive vapour atmosphere is not established, and, therefore, a corrosive wear of equipment is reduced.

The invented distribution of an antistatic agent in a polymer matrix at a molecular level (owing to use of homogeneous, clear solutions of antistatic agent) provides a possibility to produce polymer coatings having improved antistatic properties (including clear ones, i.e., without a filling agent).

The organic solvents can be tetraethylene glycol, triethylene glycol monoethyl ether, diethylene glycol dimethyl ether triethylene glycol diethyl ether, trichloroethyl phosphate or combinations thereof.

The antistatic agents can be, for instance, potassium bromide, magnesium bromide, lithium nitrate, lithium chloride, lithium trifluoromethane sulfonate, potassium hexafluorophosphate, trioctylamine, and combinations thereof.

The organic acid, additionally introduced into the composition, can be, for example, trifluoromethane sulphonic acid.

### Industrial Applicability

The present method for production of antistatic polymer materials can be most successfully utilized in chemical and petroleum chemical technologies for production of antistatic polymer coatings.

## Claims

1. A method for producing antistatic polymer materials, including incorporating into a polymer matrix, during its processing, an antistatic agent in a form of a solution consisting of an antistatic compound in an organic solvent, characterised in that said solution is a homogeneous solution, said homogeneous solution being compatible with the polymer matrix, said antistatic compound being at least one compound selected from the group consisting of organic salts, inorganic salts, complex compounds and bases; the composition being processed at temperatures not exceeding the least of the temperatures Tₚ₁, Tₚ₂, Tₖ₁, Tₖ₂, where Tₚ₁ and Tₚ₂ are decomposition temperatures of antistatic and solvent, and Tₖ₁ and Tₖ₂ are boiling temperatures of antistatic and solvent, respectively.

2. A method as set forth in claim I, wherein an organic acid is added to said solution of an antistatic agent.

3. A method as set forth in claim I, wherein said organic solvent is at least one compound selected from the group consisting of glycols, ethers and their derivatives.

4. A method as set forth in claim 1, wherein said antistatic agent is at least one compound selected from the group consisting of potassium bromide, magnesium bromide, lithium nitrate, lithium chloride, lithium trifluoromethane sulphonate, potassium hexafluorophosphate, potassium salt of di(alkyl polyethylene glycol) ether of phosphorus acid, and trioctylamine.

5. A method as set forth in claim 2, wherein said organic acid is trifluoromethane sulphonic acid.

6. A method as set forth in claim 4, wherein said organic solvent is at least one compound selected from the group consisting of tetraethylene glycol, triethylene glycol monoethyl ether, diethylene glycol dimethyl ether, triethylene glycol diethyl ether, and trichloroethyl phosphate.

## Patentansprüche

1. Verfahren zur Herstellung von antistatischen Polymermaterialien, welches die Einarbeitung eines Antistatikums in Form einer Lösung, bestehend aus einer antistatischen Verbindung in einem organischen Lösungsmittel, in eine Polymermatrix während der Verarbeitung derselben umfaßt, dadurch gekennzeichnet, daß die Lösung eine homogene Lösung ist, welche homogene Lösung mit der Polymermatrix kompatibel ist, wobei die antistatische Verbindung mindestens eine Verbindung ausgewählt aus der Gruppe bestehend aus organischen Salzen, anorganischen Salzen, Komplexverbindungen und Basen ist; wobei die Zusammensetzung bei Temperaturen verarbeitet wird, die die niedrigste der Temperaturen Tₚ₁, Tₚ₂, Tₖ₁, Tₖ₂ nicht überschreiten, worin Tₚ₁ und Tₚ₂ die Zersetzungstemperaturen des Antistatikums bzw. Lösungsmittels und Tₖ₁ und Tₖ₂ die Siedetemperaturen des Antistatikums bzw. Lösungsmittels sind.

2. Verfahren nach Anspruch 1, worin eine organische Säure zu der Antistatikumlösung zugegeben wird.

3. Verfahren nach Anspruch 1, worin das organische Lösungsmittel mindestens eine Verbindung ausgewählt aus der Gruppe bestehend aus Glycolen, Ethern und Derivaten derselben ist.

4. Verfahren nach Anspruch 1, worin das Antistatikum mindestens eine Verbindung ausgewählt aus der Gruppe bestehend aus Kaliumbromid, Magnesiumbromid, Lithiumnitrat, Lithiumchlorid, Lithiumtrifluormethansulfonat, Kaliumhexafluorphosphat, dem Kaliumsalz des Di(alkylpolyethylenglycol)-ethers von Phosphorsäure und Trioctylamin ist.

5. Verfahren nach Anspruch 2, worin die organische Säure Trifluormethansulfonsäure ist.

6. Verfahren nach Anspruch 4, worin das organische Lösungsmittel mindestens eine Verbindung ausgewählt aus der Gruppe bestehend aus Tetraethylenglycol, Triethylenglycolmonoethylether, Diethylenglycoldimethylether, Triethylenglycoldiethylether und Trichlorethylphosphat ist.

## Revendications

1. Procédé de production de matériaux polymères antistatiques, comprenant l'incorporation dans une matrice de polymère, pendant son traitement, d'un agent antistatique sous la forme d'une solution consistant en un composé antistatique dans un solvant organique, caractérisé en ce que ladite solution est une solution homogène, ladite solution homogène étant compatible avec la matrice de polymère, ledit composé antistatique étant au moins un composé choisi dans le groupe consistant en des sels organiques, des sels inorganiques, des composés complexes et des bases; la composition étant traitée à des températures n'excédant pas la plus basse des températures Tₚ₁, Tₚ₂, Tₖ₁, Tₖ₂, où Tₚ₁ et Tₚ₂ sont des températures de décomposition de l'antistatique et du solvant, et Tₖ₁ et Tₖ₂ sont des températures d'ébullition de l'antistatique et du solvant, respectivement.

2. Procédé selon la revendication 1, dans lequel un acide organique est ajouté à ladite solution d'un agent antistatique.

3. Procédé selon la revendication 1, dans lequel ledit solvant organique est au moins un composé choisi dans le groupe consistant en des glycols, des éthers et leurs dérivés.

4. Procédé selon la revendication 1, dans lequel ledit agent antistatique est au moins un composé choisi dans le groupe consistant en le bromure de potassium, le bromure de magnésium, le nitrate de lithium, le chlorure de lithium, le trifluorométhylsulfonate de lithium, l'hexafluorophosphate de potassium, le sel potassique de di(alkylpolyéthylèneglycol)éther de l'acide phosphorique, et la trioctylamine.

5. Procédé selon la revendication 2, dans lequel ledit acide organique est l'acide trifluorométhyl-sulfonique.

6. Procédé selon la revendication 4, dans lequel ledit solvant organique est au moins un composé choisi dans le groupe consistant en le tétraéthylèneglycol, l'éther monoéthylique du triéthylèneglycol, l'éther diméthylique du diéthylèneglycol, l'éther diéthylique du triéthylèneglycol et le phosphate de trichloro-éthyle.
